# EUROPÄISCHE PATENTSCHRIFT

(11) **EP 0 920 683 B1**
(45) Veröffentlichungstag und Bekanntmachung des Hinweises auf die Patenterteilung: **18.09.2002**
(21) Anmeldenummer: 97931687.4
(22) Anmeldetag: 28.06.1997
(51) Int. Cl.: G07F 7/10

(54) **VERFAHREN ZUR PRORAMMIERUNG EINES ELEKTRISCHEN GERÄTES UND INTERFACE-EINSTECKKARTE**
PROCESS FOR PROGRAMMING ELECTRIC EQUIPMENTAND PLUG-IN INTERFACING CARD
PROCEDE DE PROGRAMMATION D'UN APPAREIL ELECTRIQUE ET CARTE A PUCE FONTIONNANT COMME INTERFACE

(30) Priorität: 09.08.1996 DE 19632197
(43) Veröffentlichungstag der Anmeldung: 09.06.1999
(73) Patentinhaber: ROBERT BOSCH GMBH, 70442 Stuttgart (DE)
(72) Erfinder: WIETZKE, Joachim, D-76228 Karlsruhe (DE); GROEGER, Klaus-Erwin, D-31199 Diekholzen (DE); CORNELIUS, Rainer, D-31199 Diekholzen (DE)
(86) Internationale Anmeldenummer: DE9701367
(87) Internationale Veröffentlichungsnummer: WO98007121

(56) Entgegenhaltungen:
- EP-A- 0 193 920
- EP-A- 0 413 822
- EP-A- 0 461 623
- EP-A- 0 504 866
- EP-A- 0 530 601
- EP-A- 0 707 290

## Beschreibung

### Stand der Technik

Die Erfindung geht aus von einem Verfahren zur Programmierung eines elektrischen Gerätes sowie einer Chipkarte nach der Gattung der unabhängigen Ansprüche.

Es sind bereits elektrische Geräte, wie z.B. Autoradiogeräte oder Mobilfunkempfänger, bekannt, die für das Auswerten einer Chipkarte notwendige Öffnungen und Leseeinheiten besitzen. Die Chipkarten dienen bei Autoradiogeräten bisher ausschließlich der Speicherung einer Codenummer für den Diebstahlschutz. Es ist auch bekannt, daß Daten, die auf Chipkarten gespeichert werden, von einem Autoradiogerät ausgelesen und zur Anzeige gebracht werden können, wie z. B. die "Turn On Message" TOM. Die auf der Chipkarte gespeicherten Daten haben keinen Einfluß auf den vordefinierten Funktionsablauf der geräteinternen Software. Sie werden eingelesen, ausgewertet, ggf.-dargestellt, aber verändern die programmierte Gerätesoftware nicht. Wenn Gerätesoftware verändert werden sollte, ist bisher ein Eingriff in das Autoradiogerät notwendig, da entweder Prozessoren oder Speicherbauteile ausgetauscht oder elektrische Kontakte zur Programmiereinrichtungen hergestellt werden müssen.

Aus der DE 34 35 697 ist ein elektrisches Gerät bekannt, dessen Funktionsmerkmale in einem elektronischen Funktionsspeicher hinterlegt sind und mit Hilfe einer speziellen Codierkarte zumindestens teilweise umcodiert werden können. Hierzu weist das Gerät eine Laderoutine auf.

### Vorteile der Erfindung

Das erfindungsgemäße Verfahren mit den kennzeichnenden Merkmalen des unabhängigen Anspruch hat demgegenüber den Vorteil, daß eine Neuprogrammierung der Gerätesoftware des Gerätes möglich ist, wobei die Aufnahme- und Leseeinheit für eine Chipkarte hierfür Verwendung findet. Dadurch wird es möglich, eine Umprogrammierung des Gerätes vorzunehmen, ohne daß es weiterer Eingänge für das elektrische Gerät bedarf. Die Daten des neuen Programms werden hierbei über die Chipkarte geladen, nachdem die Funktion "Programmierung" ausgelöst wurde. Dadurch wird es möglich, eine nachträgliche Erweiterung von Gerätefunktionen zu erreichen oder eine Anpassung an z.B. geänderten Randbedingungen, sowie eine nachträgliche Fehlerbeseitigung oder ein Austausch von softwaregesteuerten Geräteeigenschaften vorzunehmen.

Durch die in den Unteransprüchen aufgeführten Maßnahmen sind vorteilhafte Weiterbildungen und Verbesserungen des im unabhängigen Anspruch angegebenen Verfahrens möglich. Besonders vorteilhaft ist es, daß der Beginn der Programmierung sowohl von der Chipkarte als auch auf verschiedenen Wegen vom Benutzer ausgelöst werden kann.

Die erfindungsgemäße Chipkarte mit den kennzeichnenden Merkmalen des unabhängigen Anspruchs hat den Vorteil, daß die Chipkarte sowohl die Kontakte für die Kartenleseeinheit sowie weitere Kontakte zur Herstellung einer Datenverbindung einer größeren Speichereinheit aufweist. Dadurch ist es möglich, Programme, deren Größe den Speicher einer einzelnen Chipkarte übersteigen würde, unter Zuhilfenahme der Chipkarte in das elektrische Gerät einzuprogrammieren. Vorteilhaft ist es hierbei auch, eine Einsteckkarte zu verwenden, die Speicherbausteine, ASICs und Mikroprozessoren enthält und ebenfalls eine Programmierung durchführen kann.

### Zeichnungen

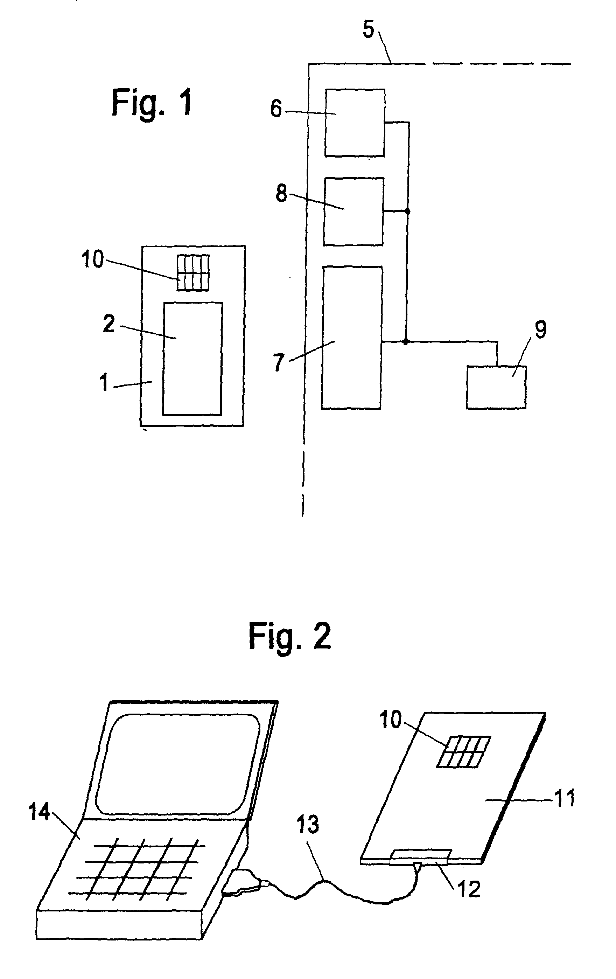

Ein Ausführungsbeispiel der Erfindung ist in den nachfolgenden Zeichnungen dargestellt und in der nachfolgenden Beschreibung erläutert. Es zeigt Figur 1 den schematischen Aufbau des Autoradiogerätes, Figur 2 eine erfindungsgemäße Einsteckkarte.

### Beschreibung des Ausführungsbeispiels

In Figur 1 wird schematisch und beispielhaft das Autoradiogerät 5 dargestellt, in dem ein Mikroprozessor 6, sowie ein programmierbarer Speicher 7 eingebaut ist. Zusätzlich befindet sich ein nur einmal beschreibbarer Speicher 8 in dem Gerät. In diesem Speicher, z. B. einem EPROM, wird ein Programmcode als Softwaresteuerung hinterlegt, der für eine Neuprogrammierung abgearbeitet werden muß. Der nichtflüchtige Speicher kann auch im geräteinternen Prozessorsystem, im ROM, enthalten sein. Weiterhin besitzt das Gerät eine Aufnahme- und Kartenleseeinheit 9, in der Chipkarten z.B. nach ISO 7816 gelesen werden können. Auf der Chipkarte 1 befindet sich ein Speicher 2, in dem der Programmcode für die Neuprogrammierung des Autoradiogerätes hinterlegt ist. Über die Kontaktfläche 10 wird die Chipkarte mit dem Leseeinheit 9 kontaktiert und das Programm 2 kann ausgelesen werden. Dazu wird vom Mikroprozessor 6 die Laderoutine im Speicher 8 aufgerufen, die die gesamte Neuprogrammierung bzw. Umprogrammierung des Speichers 7 steuert. Der Austausch des Programmes 2 im programmierbaren Speicher 7 kann ein "Update"-Vorgang sein, der nur eine teilweise Neuprogrammierung des ursprünglich im Speicher hinterlegten Programms erfordert, aber auch eine komplette Neuprogrammierung beinhalten. Der Speicher 7 besteht aus üblichen Speicherbausteinen, z. B. einem Flash-Speicher, die auch optional direkt im Mikroprozessor sein können.

In einer anderen Ausführungsform wird die Laderoutine nicht in einem gesonderten Speicher abgelegt, sondern ist ein Teil des programmierbaren Speichers. Die Laderoutine bleibt bei einer teilweisen Programmanpassung erhalten oder wird überschrieben.

Es ist ebenfalls möglich die Laderoutine in den Mikroprozessor zu integrieren, wo sie dann eine spezielle Funktion des Prozessors darstellt.

Eine Realisierung der Chipkarte besteht in einer Einsteckkarte, welche die auszutauschenden Daten, das neue Programm oder die Programmteile, auf eigenen entsprechend großen Datenspeichern, z. B. Flash-Speichern beinhaltet. Eine solche Einsteckkarte kann einen gesamten Programminhalt neu programmieren.

In vielen Fällen können die Speichermöglichkeiten auf einer einzelnen Chipkarte unzureichend für eine komplette Neuprogrammierung der Gerätesoftware sein. Heutige Chipkarten stellen z. B. einen Speicherplatz von 8 kByte zur Verfügung.
Es ist daher auch möglich ein längeres Programm oder längere Programmteile über Lesen von mehreren Chipkarten dem Gerät zu übermitteln.

Möchte man noch größere Datenmenge austauschen, kann man das Vorhandensein einer Chipkarte mechanisch und elektrisch simulieren. Dies wird durch eine Einsteckkarte 11 erreicht, die entsprechende elektrische Kontakte 10 aufweist, und ansonsten auch mechanisch einer Chipkarte gleicht. Eine solche Einsteckkarte kann auch optional zusätzlich elektrische Bauelemente, wie z. B. einen Mikroprozessor oder ASICs beinhalten. Die Chipkarte stellt über die Kontaktfläche 10 den Kontakt zum Autoradiogerät her. Die Chipkarte weist weiterhin einen elektrischen Kontakt 12 auf, an den über ein Verbindungskabel 13 ein größerer Massenspeicher 14 angeschlossen werden kann. Im allgemeinen wird ein solcher Massenspeicher sich in einem PC befinden, so daß die auszutauschenden Daten über den PC in das Autoradiogerät eingelesen werden können. Dieser Aufbau mit Chipkarte hat den Vorteil, daß das Autoradiogerät selbst bei einer Neuprogrammierung keinen Programmierinterface außer der vorhandenen Kartenleseeinheit benötigt.

Bei der Herstellung des elektrischen Kontaktes der erfindungsgemäßen Chipkarte in der Kartenleseeinheit erkennt das Gerät, daß die Laderoutine aufgerufen werden muß. Die Initialisierung der Laderoutine kann dabei über die Chipkarte selbst erfolgen, oder vom Benutzer ausgelöste werden.
Dabei ist es denkbar, eine spezielle Taste zu betätigen, oder eine Codekarte zu benutzen, die die Legitimation des Benutzers zur Neuprogrammierung übermittelt.

## Patentansprüche

1. Verfahren zur Programmierung eines elektrischen Geräts mit einer Aufnahme- und Leseeinheit (9) für Chipkarten, mit programmierbaren Speichern (7), in denen Software, die vom Mikroprozessor (6) abgearbeitet werden kann, abgelegt ist, **dadurch gekennzeichnet, daß** folgende Verfahrensschritte ausgeführt werden:
a) Einstecken einer Einsteckkarte (11), die eine Chipkarte simuliert, in die Aufnahme- und Leseeinheit (9) des elektrischen Geräts
b) Herstellen einer Verbindung zwischen der Einsteckkarte (11) und der Aufnahme- und Leseeinheit (9) über erste Kontakte (10) der Einsteckkarte
c) Herstellen einer Verbindung zwischen der Einsteckkarte (11) und einem externen Massenspeicher über weitere Kontakte (12) der Einsteckkarte, wobei der externe Massenspeicher die zu übertragenden Daten enthält, und
d) Auslösen einer Funktion "Programmierung" des Mikroprozessors (6), wodurch eine Laderoutine aktiviert wird, die dann die Daten aus dem externen Massenspeicher über die Einsteckkarte in den programmierbaren Speicher (7) des Geräts (5) lädt.

2. Verfahren zur Programmierung eines elektrischen Geräts nach Anspruch 1, **dadurch gekennzeichnet, daß** die Laderoutine (8) ein teilweises oder gesamtes Überschreiben des programmierbaren Speichers (7) ermöglicht.

3. Verfahren zur Programmierung eines elektrischen Geräts nach Anspruch 1 oder 2, **dadurch gekennzeichnet, daß** das Auslösen der Funktion "Programmierung" durch die Chipkarte (1) erfolgt.

4. Verfahren zur Programmierung eines elektrischen Geräts nach Anspruch 1 bis 2, **dadurch gekennzeichnet, daß** das Auslösen der Funktion "Programmierung" durch eine Eingabe des Benutzers erfolgt.

5. Verfahren zur Programmierung eines elektrischen Geräts nach Anspruch 1 bis 2, **dadurch gekennzeichnet, daß** das Auslösen der Funktion "Programmierung" durch Benutzung einer Codekarte, vor dem Einführen der Chipkarte (1) erfolgt.

6. Verfahren zur Programmierung eines elektrischen Geräts, nach einem der vorhergehenden Ansprüche, **dadurch gekennzeichnet, daß** in dem Gerät in einem Speicherbereich (8) die Laderoutine hinterlegt ist.

7. Einsteckkarte für die Programmierung eines elektrischen Geräts (5) das eine Aufnahme- und Leseeinheit (9) zum Herstellen einer Verbindung mit (ersten) Kontakten einer Chipkarte (1), einen Mikroprozessor (6) und einen programmierbaren Speicher (7) aufweist, **dadurch gekennzeichnet, daß** die Einsteckkarte eine Chipkarte simuliert und über zusätzliche Kontakte (12) eine Verbindung zu einem externen Massenspeicher (14) herstellbar ist, welcher die zu übertragenden Daten enthält, wobei die Einsteckkarte derart ausgebildet ist, daß beim Auslösen einer Funktion "Programmierung" des Mikroprozessors (6) eine Laderoutine aktiviert wird, die die Daten aus den externen Massenspeicher (14) über die Einsteckkarte in den programmierbaren Speicher (7) dese Geräts (5) lädt.

8. Chipkarte nach Anspruch 7, **dadurch gekennzeichnet, daß** die Einsteckkarte (11) Zusätzlich über Speicherbausteine (2, 6), ASICs, oder Mikroprozessoren verfügt.

## Claims

1. Method of programming an electrical device having an accommodating and reading unit (9) for smart cards, having programmable memories (7) in which software which can be processed by the microprocessor (6) is stored, **characterized in that** the following method steps are executed:
a) plugging a plug-in card (11) which simulates a smart card into the accommodating and reading unit (9) of the electrical device
b) establishing a connection between the plug-in card (11) and the accommodating and reading unit (9) via first contacts (10) of the plug-in card
c) producing a connection between the plug-in card (11) and an external mass memory via further contacts (12) of the plug-in card, the external mass memory containing the data to be transmitted, and
d) initiating a "programming" function of the microprocessor (6), by means of which a loading routine (8) is activated, which then loads the data from the external mass memory via the plug-in card into the programmable memory (7) of the device (5).

2. Method of programming an electrical device according to Claim 1, **characterized in that** the loading routine (8) enables partial or total overwriting of the programmable memory (7).

3. Method of programming an electrical device according to Claim 1 or 2, **characterized in that** the initiation of the "programming" function is performed by the smart card (1).

4. Method of programming an electrical device according to Claim 1 and 2, **characterized in that** the initiation of the "programming" function is performed by a user input.

5. Method of programming an electrical device according to Claim 1 and 2, **characterized in that** the initiation of the "programming" function is performed by using a code card, before the insertion of the smart card (1).

6. Method of programming an electrical device according to one of the preceding claims, **characterized in that** the loading routine is stored in an area of memory (8) in the device.

7. Plug-in card for programming an electrical device (5) which has an accommodating and reading unit (9) for establishing a connection to (first) contacts of a smart card (1), a microprocessor (6) and a programmable memory (7), **characterized in that** the plug-in card simulates a smart card and, via additional contacts (12), a connection can be established to an external mass memory (14), which contains the data to be transferred, the plug-in card being designed in such a way that when a function "programming" of the microprocessor (6) is initiated, a loading routine is activated which loads the data from the external mass memory (14) via the plug-in card into the programmable memory (7) of the device (5).

8. Smart card according to Claim 7, **characterized in that** the plug-in card (11) additionally has memory modules (2, 6), ASICs, or microprocessors.

## Revendications

1. Procédé de programmation d'un appareil électrique avec une unité d'enregistrement et de lecture (9) pour des cartes à puce, des mémoires programmables (7) contenant les programmes utilisés par le microprocesseur (6),
**caractérisé par** les étapes suivantes :
a) on engage une carte enfichable (11) qui simule une carte à puce dans l'unité d'enregistrement et de lecture (9) de l'appareil électrique,
b) on réalise une liaison entre la carte enfichable (11) et l'unité d'enregistrement et de lecture (9) par les premiers contacts (10) de la carte enfichable,
c) on établit une liaison entre la carte enfichable (11) et une mémoire de masse externe par d'autres contacts (12) de la carte enfichable, la mémoire de masse, externe, contenant les données à transmettre et
d) on déclenche une fonction « programmation » du microprocesseur (6) pour activer la routine de chargement qui charge alors les données de la mémoire de masse externe par la carte enfichable dans la mémoire programmée (7) de l'appareil (5).

2. Procédé de programmation d'un appareil électrique selon la revendication 1,
**caractérisé en ce que**
la routine de chargement (8) permet une surscription partielle ou totale de la mémoire programmable (7).

3. Procédé de programmation d'un appareil électrique selon l'une quelconque des revendications 1 ou 2,
**caractérisé en ce que**
le déclenchement de la fonction « programmation » est assuré par la carte à puce (1).

4. Procédé de programmation d'un appareil électrique selon l'une quelconque des revendications 1 et 2,
**caractérisé en ce que**
le déclenchement de la fonction « programmation » se fait par une entrée exécutée par l'utilisateur.

5. Procédé de programmation d'un appareil électrique selon l'une quelconque des revendications 1 et 2,
**caractérisé en ce que**
le déclenchement de la fonction « programmation » se fait par l'utilisation d'une carte à code avant l'introduction de la carte à puce (1).

6. Procédé de programmation d'un appareil électrique selon l'une quelconque des revendications précédentes,
**caractérisé en ce que**
la routine de chargement est enregistrée dans une mémoire (8) de l'appareil.

7. Carte enfichable pour la programmation d'un appareil électrique (5), ce dernier comportant une unité d'enregistrement et de lecture (9) pour établir une liaison avec des « premiers » contacts d'une carte à puce (1), un microprocesseur (6) et une mémoire programmable (7),
**caractérisée en ce que**
la carte enfichable simule une carte à puce et permet, par des contacts supplémentaires (12), de réaliser une liaison avec une mémoire de masse (14) externe, celle-ci contenant les données à transmettre, la carte enfichable étant réalisée de façon qu'au déclenchement d'une fonction « programmation » du microprocesseur (6), une routine de chargement soit activée, cette routine chargeant les données de la mémoire de masse externe (14) par la carte enfichable dans la mémoire programmable (7) de cet appareil (5).

8. Carte enfichable selon la revendication 7,
**caractérisée en ce que**
la carte enfichable (11) dispose, en plus de composants de mémoire (2, 6), de circuits ASIC ou de microprocesseurs.
